# EUROPEAN PATENT SPECIFICATION

(11) **EP 2 809 677 B1**
(45) Date of publication and mention of the grant of the patent: **17.05.2017**
(21) Application number: 12813049.9
(22) Date of filing: 28.12.2012
(51) Int. Cl.: C07G 1/00

(54) **PROCESS FOR THE PRODUCTION OF POLYOLS**
VERFAHREN ZUR HERSTELLUNG VON POLYOLEN
PROCÉDÉ DE PRODUCTION DE POLYOLS

(30) Priority: 02.02.2012 EP 12153691
(43) Date of publication of application: 10.12.2014
(73) Proprietor: Annikki GmbH, 8020 Graz (AT)
(72) Inventor: WALLISCH, Kerstin, A-1100 Wien (AT); KNAUS, Simone, A-1100 Wien (AT)
(74) Representative: Schwarz & Partner Patentanwälte OG
(86) International application number: PCT/EP2012/077020
(87) International publication number: WO 2013/113462

(56) References cited:
- WO-A1-97/24362
- WO-A1-2010/020903
- US-A- 3 654 194
- DAHLMANN G ET AL: "THE ORGANOCELL PROCESS-PULPING WITH THE ENVIRONMENT IN MIND", TAPPI JOURNAL, TECHNICAL ASSOCIATION OF THE PULP & PAPER INDUSTRY. ATLANTA, US, vol. 73, no. 4, 1 April 1990 (1990-04-01), pages 237-240, XP000133885, ISSN: 0734-1415

## Description

The present invention relates to the production of polyols from lignin via oxyalkylation.

Lignin is the second major component of wood and annual plants. It is a cross-linked and irregular macromolecule of relatively hydrophobic nature, whose structure is based on phenolic moieties and varies with the vegetable species. Being an abundant and renewable polymer, oxypropylation of lignin to form low-cost polyols is widespread in the polyurethane industry. The fact that propylene oxide can be obtained from glycerol makes the oxypropylation process much more interesting, because the substrate and the reagent are then based on renewable resources.^{1,2}

Oxypropylation converts lignins into liquid polyols by a chain extension reaction with propylene oxide. The synthesis of the oxypropylated lignin is always accompanied by the formation of propylene oxide oligomers (PO homopolymers) that decrease the viscosity of the reaction mixture. Oxypropylation is a well-established method for overcoming lignin's adverse effects on mechanical properties of solid materials and on viscosity. It is also a way for reducing the brittleness of lignin-derived polymers and improving viscoelastic properties.^{2,3}

The main field of application of oxyalkylated, e.g. oxypropylated lignin is centered in two areas that require viscous materials: the preparation of liquid polyols used in the manufacture of polyurethanes as well as the synthesis of macromolecular rheology modifiers.⁴ In view of the preparation of polyurethanes, oxypropylated lignin not only has the advantage of improved solubility, the hydroxyl groups are also better available for the reaction with diisocyanates, thus resulting in higher reactivity. Particularly interesting is the improved solubility in diethylene glycol, especially in combination with the polypropylene oxide homopolymer, which is always obtained as a by-product.

Glasser did pioneering work on the synthesis of oxypropylated lignins for the use in the formulation and preparation of polyurethanes. He used high molecular weight lignins (kraft and sulphite lignins) which resist a thorough oxypropylation and therefore need high temperatures and pressures. But these rather drastic conditions induced some lignin self-condensation processes and hence the formation of partly insoluble products.⁴ Nadji et al. who performed oxypropylation of different lignins (Mₙ between 700 and 1400) at elevated temperatures (180°C) in the presence of KOH as catalyst in bulk also observed a solid residue in the viscous product when oxypropylating kraft lignin and oxidized organosolv lignin, likely because of self-condensation of the lignin macromolecules. They obtained hydroxypropylated lignins with viscosities between 2.3 and 2860 Pa·s (cone-plate rheometer) and hydroxyl indices between 82 and 305. Lignin polyols with viscosities lower than 300 Pa·s and hydroxyl indices in the range of 100-200 are suitable in the manufacture of polyurethanes.⁵

Cateto et al. carried out an optimization study of lignin oxypropylation for preparing polyurethane rigid foams. The reaction was carried out in a batch reactor using KOH as the catalyst and the temperature varied between 169 and 289°C. They synthesized ligin-based polyols with viscosities between 4.02 and 345.58 Pa·s (cone-plate, 2-cm-diameter, 4°-top-angle cone, 20°C) and hydroxyl indices between 279.7 and 433.7. They found out that formulations with a viscosity below 300 Pa·s and hydroxyl indices between 300 and 800 were suitable for the synthesis of rigid polyurethane foams.²

Wu and Glasser performed hydroxypropylation of lignin in a Parr reactor under alkaline conditions (addition of KOH) at 180°C using propylene oxide (PO) by itself and PO in combination with several lignin-like model compounds and with kraft lignin. They noticed that the reaction between PO and kraft lignin was incomplete below temperatures of 170°C. When they were synthesizing hydroxypropyl lignins in toluene in the presence of KOH, also a temperature of 180°C was used.^{3,6}

Mozheiko et al. prepared polyurethane coatings using hydrolytic lignin hydroxypropylated in glycerol in the presence of KOH at 140°C.^{7,8}

Oxyalkylation (oxypropylation) processes, such as described above have in common that reaction temperatures much higher than 100°C are used. Surprisingly now a process was found where liquid polyols of oxypropylated lignin and homopolymer are obtained at a temperature of 100°C and below in good yields, resulting in several advantages, e.g. the lignin is less prone to condensation reactions, energy is saved and demand on equipment is lower. Furthermore, a preliminary treatment of the substrate with an alkaline solution at inert gas pressures of up to 30 bars, as described in a patent filing of A. Gandini (2010)⁹, is unnecessary. And, compared to known processes for the oxyalkylation (oxypropylation) of different lignins and other substrates of renewable origin described in prior art¹⁰⁻¹³, significantly milder experimental conditions could be used without impairing the properties of the product.

In one aspect the present invention provides a process for the production of polyols, comprising
i) preparing lignin from lignocellulosic material by pulping with alcohol, in particular with a C₁₋₄ alcohol, in particular ethanol, water and a base (1), in particular a hydroxide, in particular KOH, NaOH, at a temperature below 100°C, in particular from 40°C to 90°C, in particular from 50°C to 70°C, and separating the lignin dissolved from the solid,
ii) reacting lignin obtained in i) with an aliphatic saturated or unsaturated epoxide, in particular an alkylene oxide, in particular ethylene oxide or propylene oxide in the presence of a base (2), and
iii) isolating the polyols obtained.

A process provided by the present invention is herein also designated as "process(es) of (according to) the present invention."

In a process of the present invention preferably 3 to 12 parts, in particular 4 to 10 parts, in particular 5 to 8 parts of base (1) are used per 100 parts of the dry lignocellulosic material to be pulped.

In a further aspect, in a process of the present invention 3 to 12 parts, in particular 4 to 10 parts, in particular 5 to 8 parts of base (1) are used per 100 parts of the dry lignocellulosic material to be pulped.

In a process according to the present invention there is preferably used as a base (1) an inorganic base such as an inorganic hydroxide, in particular a hydroxide of an alkali metal, i.e., KOH, or preferably NaOH.

In a process of the present invention there is preferably used as an alcohol in the delignification step (i) an aliphatic alcohol, such as a C₁₋₆ alcohol, in particular preferably a C₁₋₄ alcohol such as ethanol or isopropanol. In a preferred embodiment there is used ethanol, in another preferred embodiment there is used isopropanol as an alcohol.

Another substantial aspect of a process of the present invention consists in the fact that there has surprisingly been shown that the rentability obtainable through the ethanol / water mixtures under maintenance of the described parameters in the delignification step may still be increased by the use of isopropanol / water mixtures, by obtaining still higher lignin degradation rates with the same selectivity. The use of isopropanol / water mixtures for the delignification at temperatures not exceeding 100°C in a process of the present invention has not been known so far and leads, in particular when the parameter combinations described in the invention are maintained, to advantageous results not obtained so far.

In another aspect the present invention provides the use of isopropanol as an alcohol in the delignification step (i) in a process of the present invention.

Alcohol is present in an aqueous solution in the delignification step in a process of the present invention preferably in a range of 10 to 70% (vol/vol), i.e., 20 to 50% (vol/vol), preferably from 30 to 40% (vol/vol).

As lignocellulosic material in a process of the present invention there is used organic material containing lignin, preferably annual plants such as (dry) grasses, or parts of grasses or hardwood, preferably grasses, straw, energy crops such as switch grass, elephant grass or abaca, sisal, bagasse, or untypical lignocellulose substrates such as glumes, i.e., lemmas such as husk rice, preferably straw, energy crops, bagasse or glumes, in particular preferably straw or bagasse, such as straw, e.g. wheat straw.

In a process of the present invention the pulping period for delignification in step (i) is preferably 2 hours to 36 hours, in particular preferably 3 to 18 hours.

A process of the present invention is carried out preferably in such a way that the lignocellulose content of the pulp solution (i) is kept in a range from 5 to 40% by weight, in particular from 10 to 20% by weight. The solid concentration ideal for a certain pulping objective may be determined by means of preliminary tests.

The lignin dissolved in the course of the pulping (delignifaction) process (i) in a method according to the present invention is preferably separated from the solid, for example by means of filtration, centrifugation. Due to the small lignin content the xylan remaining in the substrate may be degraded and prepared nearly completely in another pure product flow into sugars and/or oligosaccharides.

In the delignification step (i) in a process of the present invention there may be achieved through the combination of the parameters NaOH concentration, temperature, duration, material density and alcohol concentration either a maximum lignin yield of about 90% with little hemicellulose degradation (about 10%) or a lignin yield of about 70% with not more than 1% degradation of hemicellulose.

In the delignification step (i) of the present invention, by suitable selection of the concentration of the pulp components alcohol, water and base as well as the reaction parameters temperature, pulping duration and solid concentration for the respective lignocellulose to be degraded, there may be established regression models for pulping data for the respective lignocellulose to be pulped, from which the optimum composition in terms of percentage of the pulp components and the optimum reaction parameters may be selected for the respective lignin content aimed for of the solid accruing upon pulping. The establishment of such regression models may be realized with the help of a statistical design of experiments.

Delignification according to a process of the present invention was found to result in lignin having a low molecular weight, e.g. a M_{w} from 2300 and below, e.g. from 1900 to 2300. Molecular mass distribution was determined using high-perfomance size exclusion chromatography (HP-SEC) with following system: Agilent Chemstation 1200 LC System, TSKGel PW Columns (5000PW, 4000PW, 3000PW), 10 mM NaOH (pH-value of 12) as mobile phase, isocratic elution at 1 ml/min and 40°C and Poly(styrene sulfonate) sodium salt standards from Polymer Standards Service (PSS) with Mp between 208 and 78400. Using this method Lignin A (M_{w}=2250, Mₙ=900, P_{d}=2.39) was compared to commercially available lignins like Lignin B (M_{w}=3200, Mₙ=1400, P_{d}=2.28) and Lignin C (M_{w}=2750, Mₙ=1140, P_{d}=2.41). Lignin A was found to be advantageous compared with Lignin B and Lignin C because the low molecular weight makes the lignin better accessible to oxypropylation and allows lower process temperatures and pressures.

For obtaining the low molecular fraction a solution of lignin in aqueous ethanol (40-80% v/v of ethanol) is cooled to 20°C. Under constant stirring sulfuric acid is added to the solution until a pH-value of approx. 2 is reached. During this acidification the high molecular weight lignin precipitates and the low molecular weight lignin remains in solution. The precipitate obtained is allowed to settle for 1 hour and is then separated from the liquid by centrifugation, washed with water and dried to constant mass. From the centrifugation liquid obtained ethanol is removed by evaporation under reduced pressure at 50°C. During this evaporation the low molecular weight lignin precipitates which is also separated from the liquor by centrifugation, washed and dried as described above for high molecular weight lignin.

The oxyalkylation step (ii) in a process of the present invention may be carried out as appropriate. Conveniently a high pressure laboratory reactor may be used. Lignin obtained in step (i) of the present invention may be placed into the reactor together with the base (2), e.g. in the form of a finely ground powder, and with a defined amount of propylene oxide (PO), e.g. to the mixture of lignin and the base obtained, a defined amount of PO (the ratio lignin/PO equals 10/90 to 50/50 w/w) may be added, e.g. PO may be poured to the mixture. The mixture obtained is heated up to 70 to 120°C, such as 80 to 110°C, e.g. to 100°C, e.g. after flushing with an inert gas, e.g. nitrogen, argon, e.g. under pressure, which pressure arises upon heating because of the transition of liquid PO into gaseous PO. Although inert gas was used it is believed that the reaction is also possible under air. The reaction may be followed by means as appropriate, e.g. by observing the pressure in the reactor. The pressure is increasing while temperature is rising, and - after reaching a maximum - decreasing, reflecting the consumption of propylene oxide. After termination of the reaction (relative pressure is reaching zero) the mixture obtained is treated with a solvent, e.g. an organic solvent, such as a halogenated hydrocarbon, e.g. methylene chloride, an alcohol, e.g. methanol or a nitrile, e.g. acetonitrile, in one particular aspect acetonitrile. The mixture obtained is filtered in order to remove solids. From the filtrate obtained, solvent is evaporated. The evaporation residue obtained is dried, e.g. in a vacuum drying chamber, preferably at low temperatures, e.g. room temperature up to 50°C, such as 40 to 50°C.

The resulting product consists of a mixture of two polyols, one from the oxypropylation of the lignin and the other from the homopolymerization of propylene oxide. This mixture can be used, e.g. even without further purification steps, in the preparation of polyurethanes and polyesters. Such polyurethanes and polyesters may be useful in food, pharmaceutical, furniture, civil engineering, automotive and polymer industries and in different resins.

In another aspect the present invention provides the use of polyols obtained according to a process of the present invention for the production of polyurethans and/or polyesters.

In a process of the present invention as a base (2) Lewis or Brönsted bases may be used, in particular alkali or earth-alkali metal bases, in particular a hydroxide, such as KOH. The base (2) may be in the form of a powder, e.g. finely ground, or in another solid form, e.g. pellets; or in the form of a(n) (alkaline) solution.

For isolation of the hydroxypropyl lignin the mixture comprising both polyols obtained may be dissolved in an organic solvent, e.g. a nitrile, such as acetonitrile and the mixture obtained may be extracted, e.g. in a liquid-liquid extractor, with organic solvent which is not fully miscible with the solvent used for dissolution, e.g. a hydrocarbon, such as hexane, e.g. under reflux of the extraction solvent. In the extraction solvent the propylene oxide homopolymer, e.g. the main part thereof, and in the remaining solution the oxypropylated lignin, e.g. the main part thereof, is obtained.

The remaining solution comprising the oxypropylated lignin may be concentrated, e.g. solvent may be evaporated, and the evaporation residue obtained, e.g. in the form of a syrup, may be treated with acidulated water, e.g. may be dropped into acidulated water, e.g. water acidulated with an inorganic acid, such as HCl, e.g. HCl conc. Precipitation occurs and liquid still present (water and organic solvent, e.g. acetonitrile) may be removed, e.g. by centrifugation. The centrifugation residue obtained may be washed with water, e.g. until the supernatant shows a neutral pH and dried in a vacuum drying chamber at appropriate temperatures, e.g. at low temperatures such as from room temperature to 50°C, e.g. from 40 to 50°C. Oxypropylated lignin may be obtained. Confirmation that the phenolic hydroxyl groups of the lignin are oxypropylated quantitatively (which is quite important for the use in the preparation of polyurethanes) may be obtained by appropriate determination, e.g. via ¹H- and ³¹P-NMR spectroscopy.

Oxypropylated lignin obtained by a process of the present invention, optionally in combination with propylene oxide homopolymer, e.g. wherein the combination has a viscosity in the range of 2 to 300 Pa·s, e.g. 20 to 100, such as 20 to 40 Pa·s at 20°C, cone plate also is subject of the present invention.

### References

1. Gandini, A., Polymers from Renewable Resources: A Challenge for the Future of Macromolecular Materials. Macromolecules, 2008. 41(24)
2. Cateto, C.A., et al., Optimization Study of Lignin Oxypropylation in View of the Preparation of Polyurethane Rigid Foams. Industrial & Engineering Chemistry Research, 2009. 48: p. 2583-2589
3. Wu, L.C.-F. and W.G. Glasser, Engineering Plastics from Lignin. I. Synthesis of Hydroxypropyl Lignin. Journal of Applied Polymer Science, 1984. 29: p. 1111-1123
4. Gandini, A. and M.N. Belgacem, eds. Monomers, polymers and composites from renewable resources. 2008, Elsevier
5. Nadji, H., et al., Oxypropylation of lignins and preparation of rigid polyurethane foams from the ensuing polyols. Macromolecular Materials and Engineering, 2005. 290(10): p. 1009-1016
6. Glasser, W.G., L.C.F. Wu, and J.F. Selin. Synthesis, structure, and some properties of hydroxypropyl lignins. 1983: Academic New York
7. Mozheiko, L.N., et al., Polyurethanes from hydroxypropylated lignin. Vysokomol. Soedin., Ser. A, 1981. 23(1): p. 126-132
8. Mozheiko, L.N., et al., Polyurethanes prepared from oxypropylated lignins. Polymer Science U.S.S.R., 1981. 23(1): p. 141-149
9. Gandini, A., J.J. Costa Cruz Pinto, and C. Pascoal Neto, Process for the production of liquid polyols of renewable origin by the liquefaction of agro-forestry and agro-food biomass. WO 2010/020903 A1, 2010
10. Christian, D.T., et al., Process for Producing Polyoxyalkylene Ether-Polyols from Lignin. U.S. Patent 3546199, 1970
11. Pavier, C. and A. Gandini, Oxypropylation of sugar beet pulp. 1. Optimisation of the reaction. Industrial Crops and Products, 2000. 12(1): p. 1-8
12. Pavier, C. and A. Gandini, Oxypropylation of sugar beet pulp. 2. Separation of the grafted pulp from the propylene oxide homopolymer. Carbohydrate Polymers, 2000. 42(1): p. 13-17
13. Velazquez-Morales, P., J.-F. Le Nest, and A. Gandini, Polymer electrolytes derived from chitosan/polyether networks. Electrochimica Acta, 1998. 43: p. 1275-1279

### Example 1

### Adjustment of the lignin yield and of the selectivity of the lignocellulose pulp by selection of certain pulping parameters in delignification

Wheat straw (21.0% by weight lignin content, 20.9% by weight xylan content - this corresponding to 238 g hydrolysed xylose per kg wheat straw) was reduced to a particle size of 2 mm by means of an ultracentrifuge mill. The straw was suspended in a mixture of water, ethanol and NaOH and then pulped while stirring at constant temperature. In the selected experiment design (central composed optimization plan) the solid content (SC) of the wheat straw was varied in the pulp solution between 5 and 8% by mass, the temperature between 30 and 70°C, the alkaline amount between 4 and 8% by weight based on the solid, the alcohol concentration of the pulp solution was adjusted between 0 and 80% (vol/vol), the pulping duration between one and 24 hours. Upon pulping, the remaining solid was separated from the pulp solution, and the solid yield, the lignin content of the solid as well as the lignin and saccharide content (xylose, total sugar) of the pulp solution were determined. The following examples were calculated from the regression equations of the experiment design:
1. Pulping at **5% FS**, with 25% (vol/vol) ethanol in the pulp solution; duration 18 hours; temperature 70°C, alkaline amount 8% by weight.
   Solid yield: 68.5 ± 2.3%
   Lignin content of the solid: 10.8 ± 1.4%
   Delignification: 65 ± 4%
   Xylose yield in the pulp solution: 11 ± 2%
   Total sugar yield in the pulp solution: 9 ± 1%
   Under these conditions, there were dissolved from 100 g wheat straw 13.7 ± 0.8 g lignin as well as 6.2 ± 0.7 g sugar.
2. Pulping at **5% FS**, with 80% (vol/vol) ethanol in the pulp solution; duration 18 hours; temperature 70°C, alkaline amount 8% by weight.
   Solid yield: 68.5 ± 2.3%
   Lignin content of the solid: 12.6 ± 1.1%
   Delignification: 59 ± 3%
   Xylose yield in the pulp solution: 0%
   Total sugar yield in the pulp solution: 1 ± 1%
   Under these conditions, there were dissolved from 100 g wheat straw 12.4 ± 0.6 g lignin as well as 0.7 ± 0.7 g sugar.
3. Pulping at **10% FS**, with 40% (vol/vol) ethanol in the pulp solution; duration 18 hours; temperature 70°C, alkaline amount 8% by weight.
   Solid yield: 60.1 ± 3.1%
   Lignin content of the solid: 7.9 ± 1.0%
   Delignification: 78 ± 6%
   Xylose yield in the pulp solution: 6 ± 1%
   Total sugar yield in the pulp solution: 6 ± 1%
   Under these conditions, there were dissolved from 100 g wheat straw 16.4 ± 1.3 g lignin as well as 4.2 ± 0.7 g sugar.
4. Pulping at **10% FS**, with 60% (vol/vol) ethanol in the pulp solution; duration 18 hours; temperature 70°C, alkaline amount 8% by weight.
   Solid yield: 60.1 ± 3.1%
   Lignin content of the solid: 8.2 ± 1.1%
   Delignification: 75 ± 5%
   Xylose yield in the pulp solution: 1.0 ± 0.5%
   Total sugar yield in the pulp solution: 2.0 ± 0.6%
   Under these conditions, there were dissolved from 100 g wheat straw 15.8 ± 1.2 g lignin as well as 1.4 ± 0.4 g sugar.

### Example 2

### Delignification of wheat straw

As in example 1, wheat straw with a particle size of 2 mm was used. The wheat straw was suspended in a mixture of isopropanol, water and NaOH and pulped while stirring at a constant temperature of 70° for 18 hours. The solid content in the pulp solution was 5 percent by mass. In comparison, there were carried out pulping processes with 30% (vol/vol) as well as also with 60% (vol/vol) isopropanol. The alkaline amount was 8% by weight based on the solid.

Pulping with 30% (vol/vol) isopropanol:
Solid yield: 69.5%
Delignification: 93%
Xylose yield in the pulp solution: 8.3%
Under these conditions, there were dissolved from 100 g wheat straw 19.5 g lignin as well as 2.0 g xylose.

Pulping with 60% (vol/vol) isopropanol:
Solid yield: 68.2%
Delignification: 63%
Xylose yield in the pulp solution: 0.86%
Under these conditions, there were dissolved from 100 g wheat straw 13.2 g lignin as well as 0.2 g xylose.

### Example 3

### Oxypropylation of Lignin A

The oxypropylation with Lignin A is described in more detail below. It was carried out in bulk using a high pressure laboratory reactor (highpreactorTM BR-25 with the temperature controller and data logger BTC-3000 of BERGHOF) equipped with a 40 ml polytetrafluoroethylene (PTFE insert). The low molecular weight fraction of Lignin A was obtained in the form of a powder and dried at 45°C in a vacuum drying chamber before use in oxypropylation. 2.5 g of the dried Lignin A were placed into the PTFE insert, finely ground KOH powder (0.01-0.25 g per gram of dry lignin) was added and to the mixture obtained 1 to 9 g of propylene oxide per gram of dry Lignin A, e.g. an amount as set out in Table 1 below, was poured. Optionally also more than 9 g of propylene oxide per gram of dry Lignin A may be used. A magnetic stir bar was added, the inlet placed into the reaction vessel, flushed with nitrogen three times and then closed with the reactor lid containing a thermal sensor and an electric pressure meter. The reaction mixture in the reactor was stirred at 100°C overnight. When the reactor was cooled down to room temperature, the PTFE insert was put into an ice bath and the reaction product was dissolved in about 100 ml of acetonitrile. The resulting mixture was filtered and solvent was distilled off in a rotary evaporator. A liquid polyol mixture (oxypropylated lignin and propylene oxide homopolymer) was obtained which was dried at 45°C in a vacuum drying chamber. For isolation of the oxypropylated lignin the viscous polyol mixture obtained was dissolved in acetonitrile and poured into a liquid-liquid extractor which was charged with hexane. The extraction was carried out by refluxing hexane for 48 hours. The hexane fraction contained practically all of the propylene oxide homopolymer. The acetonitrile solution obtained containing practically all of the oxypropylated lignin was concentrated on a rotation evaporator and the resulting syrup was precipitated into a large excess of acidulated water, acidulated for example with HCl conc. The water was centrifuged off and the product obtained was washed with water several times until the supernatant was neutral and then dried in a vacuum drying cabinet at 45°C. The resulting oxypropylated lignin was sticky, having a very high viscosity and can be used in glue formulations.

### Example 4

### Comparison of lignin obtained according to the present invention with prior art lignins

Three different lignins were tested under the same benign experimental conditions: Lignin A, which is lignin of low molecular weight obtained according to the present invention in step (i), Lignin B, made via Alcell (Repap-CA) process, which was obtained and available from the International Lignin Institute / Switzerland and Lignin C, which is Protobind™ 2400 from Alm, India. Alcell lignin and Protobind™ 2400 are examples of sulfur-free lignins available through commercial biorefinery processes. The former is obtained in an organsolv pulping of hardwoods with an aqueous lower aliphatic alcohol solvent at approximately 200°C. Protobind comes from an alkaline pulping of straw at a temperature of about 100°C. For precipitation of the lignin a method developed by Granit (see EP 0 970 275) is used.

Oxypropylation of Lignin A, Lignin B and Lignin C was carried out in bulk using a high pressure laboratory reactor. A defined amount of lignin was placed into the reactor, finely ground KOH powder was added and to the mixture obtained a defined amount of propylene oxide (PO) was added. The mixture obtained was stirred and flushed with an inert gas three times, the reactor was closed and heated to 100°C. The pressure in the reactor rose and oxypropylation proceeded. After termination of the reaction, the mixture obtained was treated with acetonitrile and filtered in order to remove solids. From the filtrate obtained solvent was evaporated and the evaporation residue obtained was dried in a vacuum drying chamber at 45°C.
The resulting product consists of a mixture of two polyols, one from the oxypropylation of the lignin and the other from the homopolymerization of propylene oxide.

For isolation of the hydroxypropyl lignin the viscous mixture otained was dissolved in acetonitrile and the mixture obtained was poured into a liquid-liquid extractor which was charged with hexane. Extraction was carried out by refluxing hexane for 48 h to remove practically all of the propylene oxide homopolymer. The acetonitrile solution obtained was concentrated on a rotation evaporator and the resulting syrup was precipitated into a large excess of acidulated water, for example acidulated with HCl conc. Water was centrifuged off and the oxypropylated lignin obtained was washed with water several times until the supernatant was neutral and was dried in a vacuum drying chamber at 45°C. ¹H- and ³¹P-NMR spectroscopy showed that the phenolic hydroxyl groups of the oxypropylated lignin obtained were practically quantitatively oxypropylated.

In Table 1 below there are set out reaction parameters and results of the oxypropylation of Lignin A, Lignin B and Lignin C at a reaction time of 100°C, under use of practically the same amounts of starting materials.

**Table 1**

| | **Lignin Type** | | |
|---|---|---|---|
| | **Lignin A** | **Lignin B** | **Lignin C** |
| **Starting Materials** | | | |
| lignin [g] | 2.503 | 2.506 | 2.507 |
| propylene oxide [g] | 7.4 | 7.3 | 7.7 |
| propylene oxide [ml] | 8.9 | 8.8 | 9.3 |
| KOH [g] | 0.206 | 0.208 | 0.207 |

| **Results** | | | |
|---|---|---|---|
| insoluble residue [g] | 0.016 | 0.427 | 0.138 |
| soluble fraction before extraction [g] | 8.400 | 6.435 | 7.797 |
| propoxylated lignin after extraction [g] | 4.311 | 3.344 | 3.489 |
| PPO-homopolymer after extraction [g] | 4.057 | 3.176 | 3.661 |
| homopolymer content in relation to PO [wt%] | 54.8 | 43.5 | 47.5 |

| **Analysis** | | | |
|---|---|---|---|
| chain length (¹H-NMR after acetylation) | 3.81 | 2.69 | 2.86 |
| viscosimetry of polyol mixture of propoxylated lignin and PPO (cone-plate; 20°C) [Pas] | 20.75 | 223.7 | 43.6 |

Under the process parameters which are set in in Table 1, excellent and more advantageous results were received when using Lignin A compared with the use of Lignin B and Lignin C:
- Surprisingly nearly no insoluble residue was observed after oxypropylation of Lignin A at 100°C. Also with temperatures as low as 80°C hardly any unliquefied residue was detected.
- The yield of the polyol mixture (oxypropylated lignin and PPO-homopolymer) which could be used as such in the manufacture of polyurethanes without removal of the homopolymer was higher for Lignin A than for Lignin B or Lignin C.
- The yield of propoxylated lignin after extraction with hexane to remove the PPO-homopolymer and precipitation into acidulated water was much higher for Lignin A than for Lignin B or Lignin C.
- The product of Lignin A with propylene oxide showed longer PPO-grafts than Lignin B and Lignin C.
- The product of Lignin A with propylene oxide was highly viscous after removal of the propylene oxide homopolymer, while the reaction with Lignin B and Lignin C resulted in glassy solids. It was found that for achieving more viscous products with Lignin B or Lignin C a larger amount of propylene oxide would be necessary than is needed with Lignin A. This is another advantage of Lignin A in the oxypropylation because propylene oxide as a raw material is more cost-intensive than the lignin itself.
- The high viscous oxypropylated Lignin A after removal of the homopolymer was rather sticky, which enables applications in glue formulations; whereas oxypropylated Lignin B and oxypropylated Lignin C, oxypropylated under the same conditions after removal of the homopolymer each was a glassy solid under the same conditions and thus was not appropriate for applications in glue formulations.

## Claims

1. Process for the production of polyols comprising
i) preparing lignin from lignocellulosic material by pulping with alcohol, in particular with a C₁₋₄ alcohol, in particular ethanol, isopropanol; water and a base (1), in particular a hydroxide, in particular NaOH, at a temperature below 100°C, in particular from 40°C to 90°C, in particular from 50°C to 70°C, and separating the lignin dissolved from the solid,
ii)reacting lignin obtained in i) with an aliphatic saturated or unsaturated epoxide, in particular an alkylene oxide, in particular ethylene oxide or propylene oxide in the presence of a base (2), and
iii) isolating the polyols obtained.

2. Process according to claim 1, wherein 3 to 12 parts of base (1) are used per 100 parts of the dry lignocellulosic material to be pulped.

3. Process according to any one of claims 1 or 2, wherein the lignin prepared in (i) has a molecular weight from 2300 and below, in particular from 1900 to 2300.

4. Process according to any one of claims 1 to 3, wherein the base (2) in step ii) is a Lewis or Brönsted base, in particular alkali or earth-alkali metal bases, in particular a hydroxide.

5. Process according to any one of claims 1 to 5, wherein in step (ii) a reaction temperature of 100°C and below is used.

6. Process according to any one of claims 1 to 5, wherein the polyols obtained in (ii) are separated by extraction.

7. Use of polyols obtained according to any one of claim 1 to 6 for the production of polyurethanes and/or polyesters.

8. Use of polyols obtained according to claim 6 for the production of glue formulations.

9. Oxypropylated lignin obtained or obtainable according to any one of claims 1 to 6.

10. Oxyethylated lignin obtained or obtainable according to any one of claims 1 to 6.

## Patentansprüche

1. Prozess zur Herstellung von Polyolen, umfassend
i) Herstellen von Lignin aus lignocellulosischem Material durch Aufschluss mit Alkohol, insbesondere mit einem C₁₋₄ Alkohol, insbesondere Ethanol, Isopropanol; Wasser und einer Base (1), insbesondere einem Hydroxid, insbesondere NaOH, bei einer Temperatur unter 100°C, insbesondere von 40°C bis 90°C, insbesondere von 50°C bis 70°C, und Abscheiden des gelösten Lignins aus dem Feststoff,
ii) Reagieren des aus i) erhaltenen Lignins mit einem aliphatischen gesättigten oder ungesättigten Epoxid, insbesondere einem Alkylenoxid, insbesondere Ethylenoxid oder Propylenoxid in der Gegenwart einer Base (2), und
iii) Isolieren der erhaltenen Polyole.

2. Prozess gemäß Anspruch 1, wobei 3 bis 12 Teile der Base (1) pro 100 Teile des trockenen Lignocellulosematerials, das aufgeschlossen werden soll, verwendet werden.

3. Prozess gemäß einem der Ansprüche 1 oder 2, wobei das in (i) hergestellte Lignin ein Molekulargewicht von 2300 und weniger, insbesondere von 1900 bis 2300, aufweist.

4. Prozess gemäß einem der Ansprüche 1 bis 3, wobei die Base (2) im Schritt ii) eine Lewis- oder Brönsted-Base ist, insbesondere Alkali- oder Erdalkalimetallbasen, insbesondere ein Hydroxid.

5. Prozess gemäß einem der Ansprüche 1 bis 5, wobei im Schritt (ii) eine Reaktionstemperatur von 100°C und weniger verwendet wird.

6. Prozess gemäß einem der Ansprüche 1 bis 5, wobei die aus (ii) erhaltenen Polyole durch Extraktion abgeschieden werden.

7. Verwendung von gemäß einem der Ansprüche 1 bis 6 erhaltenen Polyolen zur Herstellung von Polyurethanen und/oder Polyestern.

8. Verwendung von gemäß Anspruch 6 erhaltenen Polyolen zur Herstellung von Kleberformulierungen.

9. Oxypropyliertes Lignin, das gemäß einem der Ansprüche 1 bis 6 erhalten wird oder erhalten werden kann.

10. Oxyethyliertes Lignin, das gemäß einem der Ansprüche 1 bis 6 erhalten wird oder erhalten werden kann.

## Revendications

1. Procédé de production de polyols comprenant
i) la préparation de lignine à partir d'une matière lignocellulosique par réduction en pulpe avec de l'alcool, en particulier avec un alcool en C₁₋₄, en particulier de l'éthanol, de l'isopropanol ; de l'eau et une base (1), en particulier un hydroxyde, en particulier de la NaOH, à une température inférieure à 100 °C, en particulier de 40 °C à 90 °C, en particulier de 50 °C à 70 °C, et la séparation de la lignine dissoute à partir du solide,
ii) la réaction de la lignine obtenue en i) avec un époxyde aliphatique saturé ou insaturé, en particulier un oxyde d'alkylène, en particulier de l'oxyde d'éthylène ou de l'oxyde de propylène en présence d'une base (2), et
iii) l'isolement des polyols obtenus.

2. Procédé selon la revendication 1, dans lequel 3 à 12 parties de base (1) sont utilisées pour 100 parties de la matière lignocellulosique sèche à réduire en pulpe.

3. Procédé selon l'une quelconque des revendications 1 ou 2, dans lequel la lignine préparée en (i) a un poids moléculaire d'au plus 2 300, en particulier de 1 900 à 2 300.

4. Procédé selon l'une quelconque des revendications 1 à 3, dans lequel la base (2) à l'étape ii) est une base de Lewis ou de Brönsted, en particulier des bases de métaux alcalins ou alcalino-terreux, en particulier un hydroxyde.

5. Procédé selon l'une quelconque des revendications 1 à 5, dans lequel, à l'étape (ii), une température de réaction d'au plus 100 °C est utilisée.

6. Procédé selon l'une quelconque des revendications 1 à 5, dans lequel les polyols obtenus en (ii) sont séparés par extraction.

7. Utilisation de polyols obtenus selon l'une quelconque des revendications 1 à 6 pour la production de polyuréthanes et/ou de polyesters.

8. Utilisation de polyols obtenus selon la revendication 6 pour la production de formulations de colle.

9. Lignine oxypropylée obtenue ou pouvant être obtenue selon l'une quelconque des revendications 1 à 6.

10. Lignine oxyéthylée obtenue ou pouvant être obtenue selon l'une quelconque des revendications 1 à 6.
